# EUROPEAN PATENT SPECIFICATION

(11) **EP 3 067 820 B1**
(45) Date of publication and mention of the grant of the patent: **22.01.2020**
(21) Application number: 14860309.5
(22) Date of filing: 19.02.2014
(51) Int. Cl.: G06F 21/75, H04L 9/00

(54) **DOUBLE-LAYER COMPOUND REGISTER SYSTEM AND METHOD FOR RESISTING ENERGY ANALYSIS ATTACKS**
DOPPELSCHICHTIGES VERBINDUNGSREGISTERSYSTEM UND VERFAHREN FÜR BESTÄNDIGKEIT GEGEN ENERGIEANALYSEANGRIFFE
SYSTÈME DE REGISTRE DE COMPOSANTE À DOUBLE COUCHE ET PROCÉDÉ POUR RÉSISTER À DES ATTAQUES D'ANALYSE D'ÉNERGIE

(30) Priority: 06.11.2013 CN 201310547995
(43) Date of publication of application: 14.09.2016
(73) Proprietor: Institute Of Information Engineering Chinese Academy of Sciences, Beijing 100093 (CN)
(72) Inventor: GAO, Neng, Beijing 100093 (CN); TU, Chenyang, Beijing 100093 (CN); MA, Yuan, Beijing 100093 (CN); LIU, Zongbin, Beijing 100093 (CN); JING, Jiwu, Beijing 100093 (CN)
(74) Representative: AWA Sweden AB
(86) International application number: PCT/CN2014/072230
(87) International publication number: WO 2015/066987

(56) References cited:
- CN-A- 101 187 963
- CN-A- 101 834 720
- CN-A- 102 394 606
- US-A1- 2004 233 749
- THOMAS POPP ET AL: "Masked Dual-Rail Pre-charge Logic: DPA-Resistance Without Routing Constraints", 29 August 2005 (2005-08-29), CRYPTOGRAPHIC HARDWARE AND EMBEDDED SYSTEMS - CHES 2005 LECTURE NOTES IN COMPUTER SCIENCE;;LNCS, SPRINGER, BERLIN, DE, PAGE(S) 172 - 186, XP047029405, ISBN: 978-3-540-28474-1 * page 172 - page 175 *
- TANIMURA K ET AL: "HDRL: Homogeneous Dual-Rail Logic for DPA Attack Resistive Secure Circuit Design", IEEE EMBEDDED SYSTEMS LETTERS, IEEE, USA, vol. 4, no. 3, 1 September 2012 (2012-09-01), pages 57-60, XP011478955, ISSN: 1943-0663, DOI: 10.1109/LES.2012.2193115

## Description

### FIELD OF THE INVENTION

The present disclosure relates to a computer security field, and more particularly, to a double-layer compound register system and a method for resisting power analysis attacks.

### BACKGROUND OF THE INVENTION

At present, with development of the science and technology, various chip hardware devices are widely used and have a vast market prospect due to their small size, fast calculation speed, variety of shapes, various e-commerce application scenarios, and long service life, etc.

With widespread use of the chip hardware devices, a Side-Channel security problem for these hardware devices is gradually exposed. Information processed by the chip may be obtained by analyzing chip power consumption, which causes an information leakage accident. In the chip hardware devices, the power consumption of the register changes significantly.

In the information theory, a Hamming Distance (HD) value between two character strings with the same length is the number of different characters of the corresponding character positions, i.e., the number of characters required to replace one character string with another. Hamming Weight (HW) value is the HD value between a character string and an all-zero character string with the same length, i.e., the number of non-zero components in the character string. As for the standard register in the chip hardware device, the HW value of one clock cycle denotes the number of 1 in the character string stored by the register in the clock cycle. The HD value of two adjacent clock cycles denotes the number of different bit values (0 or 1) of the corresponding positions in two bit strings stored by the register in the two clock cycles. According to the power analysis theory, in the working state, if the HW value and the HD value of the standard register are not constant, the power consumption of the standard register may vary. Therefore, the information, which is stored in the standard register or the chip hardware device, may be recovered using power analysis attack technologies.

Therefore, the standard register in the chip hardware device should be protected via following methods, so that the standard register may have the capability of resisting of power analysis attacks.

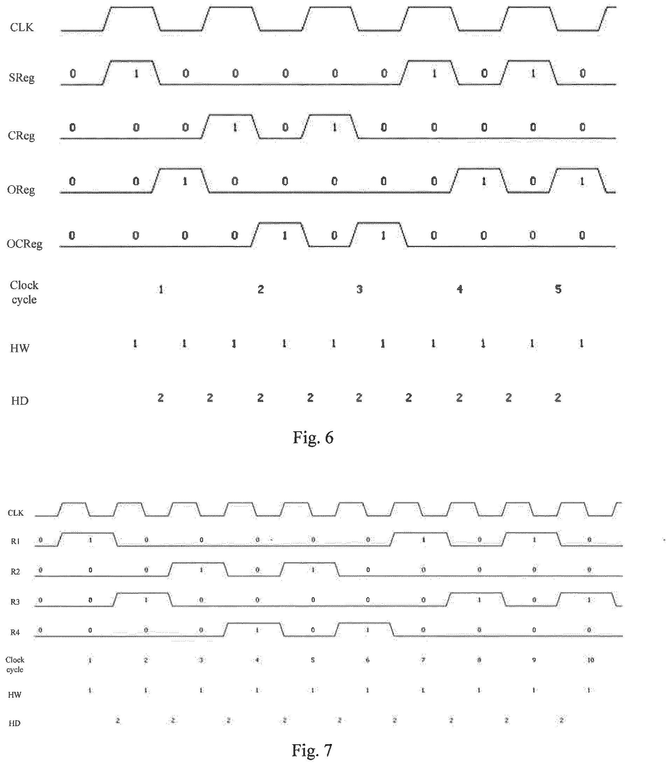

The chip hardware devices are all configured with the specific registers, such as Dual-rail Precharge Logic (DPL)-structure registers, which may resist power analysis attacks. The DPL-structure register consists of four sub-registers, the bit number of which is same as the standard register. When data is input into the DPL-structure register at the beginning of a clock cycle, the input data is stored in the first sub-register, the input data is inverted and input into the second sub-register. When the next clock cycle begins, the data in the first sub-register is input into the third sub-register, the data in the second sub-register is input into the fourth sub-register, and the first and second sub-registers are configured as zero. As shown in figure 7, when a sequence "1, 0, 0, 1, 1" is allocated to the DPL-structure register, two clock cycles are required to output one value in the sequence. That is, ten clock cycles are required to output the five values in the sequence. Although the above method may have some effects of preventing the leakage of the information in the DPL-structure register via the power analysis, the throughput of the DPL-structure register is half of that of the standard register. Even the throughput of the chip hardware device using the DPL-structure register is half of that using the standard register.

US 2004/0233749 A1 discloses a data processing apparatus and a logical operation apparatus for processing data as an operation object.

### SUMMARY

An embodiment of the present disclosure provides a double-layer compound register system, which may have the capability of resisting power analysis attacks on the premise of not reducing the throughput of the chip hardware device. This register system may conveniently replace the existing standard register, and may enhance the security the register or even the chip hardware device.

Another embodiment of the present disclosure provides a method, which may have the capability of resisting power analysis attacks on the premise of not reducing the throughput of the chip hardware device.

Another embodiment of the present disclosure provides a control device, which may have the capability of resisting power analysis attacks on the premise of not reducing the throughput of the chip hardware device.

The invention is defined by a system according to claim 1, a method according to claim 8 and a control device according to claim 10. Therefore, the HD value and the HW value of the system in the work state may be constant. The system not only may resist the power analysis attacks, but also may reduce the period for outputting a group of data to one clock cycle. Therefore, the throughput of the whole chip hardware device may be enhanced. Components used by the double-layer compound register system in embodiments of the present disclosure may satisfy requirements of the standard circuit component database, and may have good compatibility, such as may be compatible with the chip hardware device.

### BRIEF DESCRIPTION OF THE DRAWINGS

Figure 1 is a schematic diagram illustrating a double-layer compound register system in accordance with various embodiments of the present disclosure;
Figure 2 is a schematic diagram illustrating a control unit in the double-layer compound register system shown in figure 1;
Figure 3 shows a sequence diagram of each pin of the control unit shown in figure 1 in accordance with various embodiments of the present disclosure;
Figure 4 is a diagram illustrating change of the HW value and the HD value of a work register shown in figure 1 in five consecutive clock cycles i.e., clock cycles 1 to 5;
Figure 5 shows the sequence diagram of the work register and output register in the double-layer compound register system shown in figure 1;
Figure 6 shows the sequence diagram of each register in the double-layer compound register system shown in figure 1;
Figure 7 shows the sequence diagram of a DPL-structure register in accordance with various embodiments of the present disclosure; and
Figure 8 is a schematic diagram illustrating another structure of the double-layer compound register system in accordance with various embodiments of the present disclosure.

### DETAILED DESCRIPTION

The present disclosure is further described in detail hereinafter with reference to the accompanying drawings to make the objective, technical solution and merits thereof more apparent.

Embodiments of the present disclosure may provide a double-layer compound register system. The system may include: a control unit, a work register, a complementary register, an output register, and an output complementary register.

The control unit may be configured to receive an external reset signal and an external clock signal, and enable the work register, the complementary register, the output register and the output complementary register to go into a reset state when the external reset signal is valid. When the external reset signal is invalid, the control unit may be further configured to enable the work register and the complementary register to go into a work state, and enable the output register and the output complementary register to go into the reset state in the first half of each clock signal. When the external reset signal is invalid, the control unit may be further configured to enable the output register and the output complementary register to go into the work state, and enable the work register and the complementary register to go into the reset state in the second half of the each clock signal.

In the work state, the value of the work register and the value of the complementary register are complementary. The value of the output register and the value of the output complementary register are complementary.

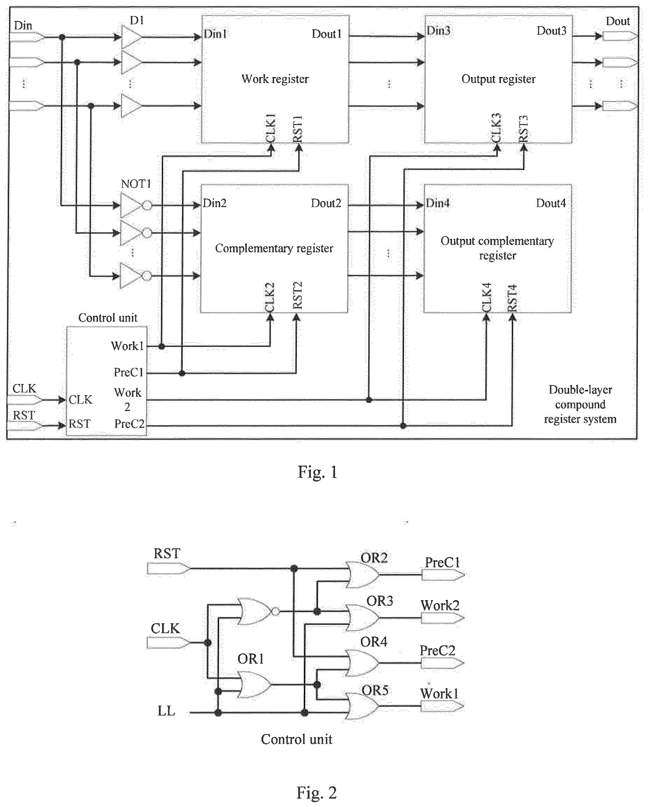

According to an example of the present disclosure, as shown in figure 1 and figure 2, the control unit in the double-layer compound register system may include: an external clock signal input port, i.e., CLK, an external reset signal input port, i.e., RST, a Low Signal Level Port, i.e., LL, a first clock signal output port, i.e., Work1, a second clock signal output port, i.e., Work2, a first reset signal output port, i.e., PreC1, a second reset signal output port, i.e., PreC2, a NOR gate, i.e., NOR, a first OR gate, i.e., OR1, a second OR gate, i.e., OR2, a third OR gate, i.e., OR3, a fourth OR gate, i.e., OR4, and a fifth OR gate, i.e., OR5.

The CLK and LL may connect to input ports of the NOR and input ports of the OR1 respectively. The output port of the NOR and the RST may connect to input ports of the OR2. The output port of the NOR and the LL may connect to input ports of the OR3 respectively. The RST and the output port of the OR1 may connect to input ports of the OR4 respectively. The output port of the OR1 and the LL may connect to input ports of the OR5 respectively.

The output port of the OR2 may connect to the PreC1. The output port of the OR3 may connect to the Work2. The output port of the OR4 may connect to the PreC2. The output port of the OR5 may connect to the Work1.

The double-layer compound register system may include a data input port, i.e., Din and a data output port, i.e., Dout. The Din may connect to a data input port of the work register, i.e., Din1 via a first delay gate, i.e., D1. The Din may connect to a data input port of the complementary register, i.e., Din2 via a first NOT gate, i.e., NOT1. An output port of the work register, i.e., Dout1 may connect to a data input port of the output register, i.e., Din3. An output port of the complementary register, i.e., Dout2 may connect to a data input port of the output complementary register, i.e., the Din4. An output port of the output register, i.e., Dout3 may connect to the Dout.

In order to ensure synchronization of the signals, delay of the D1 may be the same as that of the NOT1. Delay of the NOR may be the same as that of the OR1.

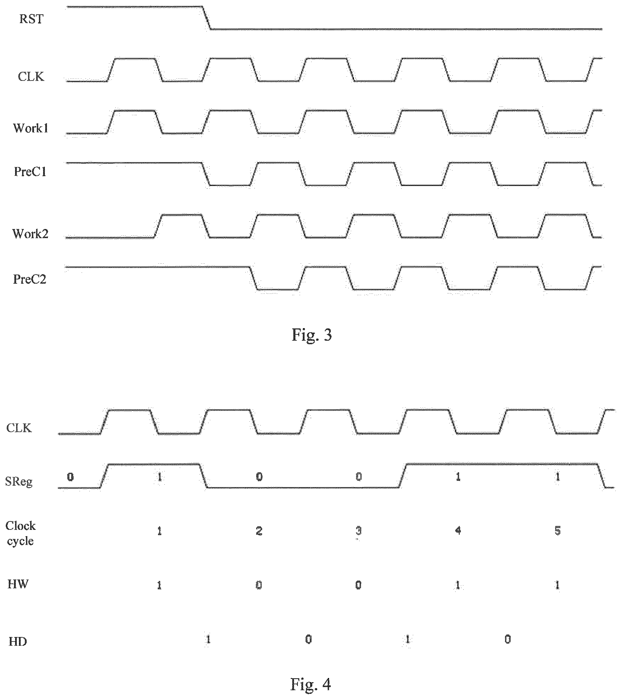

Taking the one-bit register for example, suppose that the reset signal is active high. All registers may be double-edge-triggered registers, and may be configured as zero in an initial state. According to figures 3 to figure 6, the work process of the double-layer compound register system in the above examples may be described in detail hereinafter.

Figure 3 shows the sequence diagram of each pin generated by the control unit in five clock cycles.
A: In the first clock cycle, the RST may be configured as the high level, i.e., the double-layer compound register system may be in the reset state. Both the PreC1 and the PreC2 may be the high level, i.e., all the registers may be in the reset state.
B: In the second to fifth clock cycles, the RST may be set to the LL, i.e., the double-layer compound register system may be in the work state. The state of the each standard register in the system may be as follows.
B1: Corresponding to a rising edge of each clock cycle, Work1 may be the rising edge, the PreC1 may be the LL, the work register and complementary register may be in the work state, the PreC2 may be high level, the output register and the output complementary register may be in the reset state.
B2: Corresponding to a falling edge of the each clock cycle, PreC1 may be the high level, the work register and the complementary register may be in the reset state, the Work2 may be the rising edge, the PreC2 may be the LL, the output register and output complementary register may be in the work state.

The state of the four standard registers may meet the definition of the CLK pin and RST pin in the double-layer compound register system.

It may be seen from figure 3 that when the double-layer compound register system is in the work state, the PreC1 signal and PreC2 signal, which may be the same as the inverse values of the Work1 signal and Work2 signal respectively, may be obtained by the control unit. The Work2 signal may be half clock cycle delay of the Work1 signal. The Work1 signal may be the same as the CLK signal of the double-layer compound register system. Therefore, the state of each register in the double-layer compound register system may be calculated using the CLK signal of the double-layer compound register system.

In the information theory, a Hamming Distance (HD) value between two character strings with the same length is the number of different characters of the corresponding character positions, i.e., the number of characters required to replace one character string with another. Hamming Weight (HM) value is the HD value between a character string and an all-zero character string with the same length, i.e., the number of non-zero components in the character string. As for the standard register in the chip, the HW value of one clock cycle denotes the number of 1 in the character string stored by the register in the clock cycle. The HD value of two adjacent clock cycles denotes the number of different bit values (0 or 1) of the corresponding positions in two bit strings stored by the register in the two adjacent clock cycles. According to the power analysis theory, in the working state, if the HW value and the HD value of the standard register are not constant, the power consumption of the standard register may vary. Therefore, the information in the standard register or the chip hardware device may be recovered using power analysis attack technologies.

Figure 4 is a diagram illustrating change of the HW value and the HD value of the SReg in five consecutive clock cycles, i.e., clock cycles 1 to 5 when the chip hardware device is in the work state. The initial state of all the registers may be configured as zero. As shown in figure 4, a sequence "1, 0, 0, 1, 1" may be allocated to the work register in the clock cycles 1 to 5. By analyzing the HW values and the HD values in figure 4, it may be found that the HW value and the HD value corresponding to each clock cycle may be not constant. According to the power analysis theory, in the work state, if the HW value and the HD value of the standard register are not constant, the information stored in the standard registers or even the chip hardware device may be recovered using the power analysis attack technology.

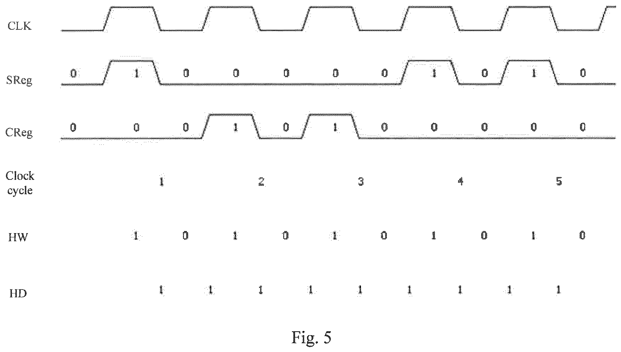

Figures 5 to 6 are sequence diagrams of the double-layer compound register system implemented using the double-layer compound register method in accordance with various embodiments of the present disclosure. Suppose that the sequence "1, 0, 0, 1, 1" may be allocated to the SReg in clock cycles 1 to 5. According to the structure of the control unit in figure 2 and the sequence analysis in figure 3, it can be found that the SReg may be configured as the sequence "1, 0, 0, 1, 1" at the rising edge of the clock cycles 1 to 5, and the SReg may be configured as zero in the second half the clock cycles 1 to 5. Further, it can be seen from figure 1 that the value of the CReg and the value of the SReg may be complementary. The CReg may be allocated with values "0, 1, 1, 0, 0" at the rising edges of clock cycles 1 to 5, while the CReg may be allocated with all-zeros in the second half of each of the clock cycles 1 to 5. The analysis result may be the same as the sequence shown in figure 5. Since the value of the CReg is determined by the SReg, the sum of the HW value and the HD value should be taken into consideration. As shown in figure 5, in each work state, the sum of the HW value may always be one. In each reset phase, the sum of the HW value may always be zero. Each time when the state is changed, the sum of the HD value may always be one. Therefore, the HW value and the HD value may be kept constant, so that the double-layer compound register system may have the capability of resisting power analysis attacks.

The data stored in the standard register may be output on the rising edge of the each clock cycle. It can be seen from the sequence diagram shown in figure 5 that since on the rising edge of the each clock cycle, the value of the work register may have been configured as zero, a standard register may be required, i.e., an OReg should be added to store the corresponding data when the work register is configured as zero. The output register may need to be compensated by another standard register to resist power attacks. Therefore, a standard register may also be required, i.e., an OCReg should be added to store the corresponding data when the complementary register is configured as zero. The corresponding sequences may be shown in figure 6. The data stored in the SReg may be output to the OReg on the falling edge of the clock cycle and the data stored in the CReg may be output to the OCReg on the falling edge of the clock cycle. The sequence in figure 3 may ensure that when the SReg and CReg are in the work state, the OReg and OCReg may be in the reset phase and when the SReg and CReg are in the reset state, the OReg and OCReg may be in the work state. The values of the CReg, OReg and OCReg may be determined by the SReg and the HW value and HD value may be the sum of the four registers. As shown in figure 6, the data stored in the double-layer compound register system may be changed every half clock cycle, the sum of the HW values may always be 1 every half clock cycle, and the sum of the HD values may always be 2 when the state changes. Therefore, the double-layer compound register system may have the capability of resisting power analysis attacks.

Taking the one-bit register for example, the multi-bit register may be obtained by combining multiple one-bit registers. The double-layer compound register system also may adopt the multi-bit registers.

Further, in a digital circuit, fan-out of a logic gate may be defined as the number of logic gates, which may be fed back by the logic gate or connected to the logic gate. During the working process of the register, the fan-out of the register may affect the power consumption of the register. Therefore, in order to prevent power analysis attack for the register, embodiments of the present disclosure may try to ensure that the values allocated to the fan-out of each pair of registers (such as, the work register and complementary register pair, and the output register and the output complementary register pair) in the register system should be identical.

In order to ensure that the fan-out of the registers should be as close as possible, based on the above embodiment, another embodiment may be provided. In this embodiment, the fan-out of each pair of registers of the double-layer compound register system, i.e., the work register and complementary register pair, and the output register and output complementary register pair may be identical.

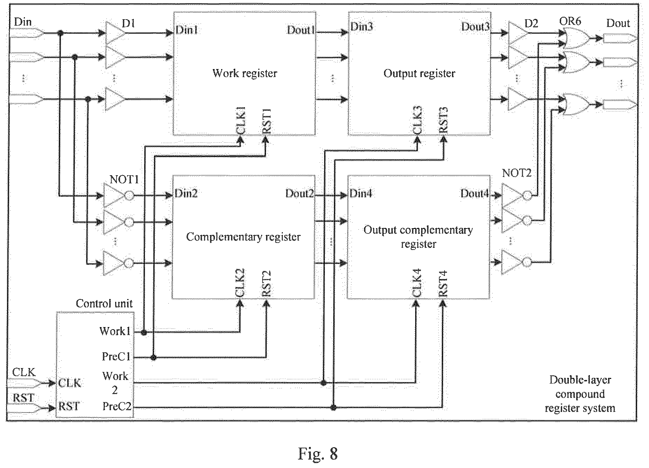

As shown in figure 8, the double-layer compound register system provided by embodiments of the present disclosure may include: a control unit, a work register, a complementary register, an output register, and an output complementary register. The circuit structure of the control unit in this embodiment may be the same as that shown in figure 2. The connection relationships among the control unit, the work register, complementary register, the output register and the output complementary register may be the same as those shown in figure 1.

In this embodiment, the data input port, i.e., Din may connect to the data input port of the work register, i.e., Din1 via a first delay gate i.e., D1. The Din may connect to a data input port of the complementary register, i.e., Din2 via a first NOT gate, i.e., NOT1. A data output port of the work register, i.e., Dout1 may connect to a data input port of the output register, i.e., Din3. A data output port of the complementary register, i.e., Dout2 may connect to a data input port of the output complementary register, i.e., the Din4. A data output port of the output register, i.e., Dout3 may connect to an input port of a sixth OR gate, i.e., OR6 via a second delay gate, i.e., D2. A data output port of the output complementary register, i.e., Dout4 may connect to an input port of the OR6 via a second NOT gate, i.e., NOT2. The output port of the OR6 may connect to the Dout.

Compared with the embodiment corresponding to figure 1, the D2, NOT2 and OR6 may be added in this embodiment. Further, in the embodiment corresponding to figure 1, the output complementary register may not output data. In this embodiment, an OR operation may be performed for the output of the output complementary register processed by the NOT2 and the output of the output register, so that the fan-out of the work register may be the same as that of the complementary register, and the fan-out of the output register may be the same as that of the output complementary register. In order to ensure the consistency of the delay, the Dout3 of the output register may connect to the OR6 via the D2, and the delay of the D2 may be the same as that of the NOT2.

In this embodiment, in the circuit shown in figure 8, since the output of the output complementary register is inverted and the OR operation is performed for the inverted output of the output complementary register and the output of the output register, and since the current value of the output complementary register and the current value of the output register may be complementary in the second half of the each clock cycle, the value, which may be obtained by performing the OR operation for the inverted output of the output complementary register and the output of the output register, may be the same as the output of the output register in the embodiment corresponding to figure 1. Although the circuit structure is improved in this embodiment, the sequence of the circuit in this embodiment may be the same as that in the embodiment corresponding to the figure 1. If the sequence "1, 0, 0, 1, 1" is allocated to the work register in clock cycles 1 to 5, the sequence diagram of the each register in the double-layer compound register system may be the same as that shown in figure 6.

Based on the above double-layer compound register system, an embodiment of the present disclosure may further provide a method for resisting power analysis attack. The method may include:
when an external reset signal is valid, sending, by a control unit, a valid reset signal to a work register, a complementary register, an output register, and an output complementary register;
when the external reset signal is invalid, sending, by the control unit, a clock signal and an invalid reset signal to the work register and the complementary register, and, by the control unit, sending the valid reset signal to the output register and output complementary register in a first half of each clock cycle;
when the external reset signal is invalid, sending, by the control unit, the clock signal and the invalid reset signal to the output register and the output complementary register, and sending the valid reset signal to the work register and the complementary register in the second half of the each clock cycle;
wherein in the work state, a value of the work register and a value of the complementary register are complementary, and a value of the output register and a value of the output complementary register are complementary.

With the double-layer compound register system and the method for resisting power analysis, the control unit may enable the work register and the complementary register with complementary values to work in the first half of the clock cycle, and enable the output register and the output complementary register with complementary values to reset. In the second half of the clock cycle, the control unit may enable the output register and the output complementary register with complementary values to work, and enable the work register and complementary register with complementary values to reset. Therefore, the HD value and the HW value of the system in the work state may be constant. The system not only may resist the power analysis attacks, but also may reduce the clock cycle for outputting a group of data to one clock cycle. Therefore, the throughput of the whole chip hardware device may be enhanced. Components used by the double-layer compound register system in embodiments of the present disclosure may satisfy requirements of the standard circuit component database, and may have good compatibility, such as may be compatible with the chip hardware device.

What has been described and illustrated herein are examples of the disclosure along with some variations. The terms, descriptions and figures used herein are set forth by way of illustration only and are not meant as limitations. Many variations are possible within the scope of the invention, which is only defined by the appended claims.

## Claims

1. A double-layer compound register system, comprising: a control unit, a work register, a complementary register, an output register and an output complementary register; wherein
the control unit is configured to receive an external reset signal and an external clock signal;
when the external reset signal is valid, the control unit is further configured to put the work register, the complementary register, the output register and the output complementary register into a reset state;
when the external reset signal is invalid, the control unit is further configured to put the work register and the complementary register into a work state, and to put the output register and the output complementary register into the reset state in a first half of each clock cycle;
when the external reset signal is invalid, the control unit is further configured to put the output register and the output complementary register into the work state, and to put the work register and the complementary register into the reset state in the second half of the each clock cycle;
in the work state, a value of the work register and a value of the complementary register are complementary, and a value of the output register and a value of the output complementary register are complementary.

2. The system according to claim 1, wherein
when the external reset signal is valid, the control unit is further configured to send a valid reset signal to the work register, the complementary register, the output register and the output complementary register;
when the external reset signal is invalid, the control unit is further configured to send the external clock signal and an invalid reset signal to the work register and the complementary register, and send the valid reset signal to the output register and output complementary register in the first half of the each clock cycle;
when the external reset signal is invalid, the control unit is further configured to send the external clock signal and the invalid reset signal to the output register and output complementary register, and send the valid reset signal to the work register and complementary register in the second half of the each clock cycle.

3. The system according to claim 2, wherein the control unit comprises: a CLK, an RST, an LL, a Work1, a Work2, a PreC1, a PreC2, a NOR, an OR1, an OR2, an OR3, an OR4, and an OR5;
the CLK and the LL connect to input ports of the NOR and input ports of the OR1 respectively;
an output port of the NOR and the RST connect to input ports of the OR2;
the output port of the NOR and the LL connect to input ports of the OR3;
the RST and an output port of the OR1 connect to input ports of the OR4;
the output port of the OR1 and the LL connect to input ports of the OR5;
an output port of the OR2 connects to the PreC1;
an output port of the OR3 connects to the Work2;
an output port of the OR4 connects to the PreC2; and
an output port of the OR5 connects to the Work1;
wherein Work1 is a first clock signal output port, Work2 is a second clock signal output port, PreC1 is a first reset signal output port, PreC2 is a second reset signal output port, LL is a Low Signal Level Port, NOR is a NOR gate, OR1-OR5 are OR gates, and CLK is a clock signal input port.

4. The system according to claim 3, further comprising: a Din and a Dout; wherein
the Din connects to to a Din1 of the work register via a D1;
the Din connects to a Din2 of the complementary register via a NOT1; a Dout1 of the work register connects to a Din3 of the output register;
a Dout2 of the complementary register connects to Din4 of the output complementary register; and
a Dout3 of the output register connects to the Dout;
wherein Din, Din1, Din2, Din3 and Din4 are data input ports, Dout1, Dout2, Dout3 and Dout are data output ports, D1 is a first delay gate and NOT1 is a first NOT gate.

5. The system according to claim 3, further comprising: a Din and a Dout; wherein
the Din connects to Din1 of the work register via a D1;
the Din connects to a Din2 of the complementary register via a NOT1;
a Dout1 of the work register is to connect to a Din3 of the output register;
a Dout2 of the complementary register connects to a Din4 of the output complementary register; and
a Dout3 of the output register connects to an input port of an OR6 via a D2;
a Dout4 of the output complementary register connects to another port of the OR6 via a NOT2; and
an output port of the OR6 connects to the Dout; wherein Din, Din1, Din2, Din3 and Din4 are data input ports, Dout1, Dout2, Dout3, Dout4 and Dout are data output ports, D1 is a first delay gate, NOT1 is a first NOT gate, OR6 is a sixth OR gate, D2 is a second delay gate and NOT2 is a second NOT gate.

6. The system according to claim 4 or 5, wherein
delay of the D1 is same as that of the NOT1;
delay of the D2 is same as that of the NOT2; and
delay of the NOR is same as that of the OR1.

7. The system according to any of claims 1 to 5, wherein the work register, the complementary register, the output register and the output complementary register are double-edge-triggered registers.

8. A method for resisting power analysis attack, comprising:
receiving, from a control unit, an external reset signal and an external clock signal;
putting, by the control unit, a work register, a complementary register, an output register and an output complementary register into a reset state when the external reset signal is valid;
putting, by the control unit, the work register and the complementary register into a work state, and putting, by the control unit, the output register and the output complementary register into the reset state in a first half of each clock cycle when the external reset signal is invalid;
putting, by the control unit, the output register and the output complementary register into the work state, and putting, by the control unit, the work register and the complementary register into the reset state in the second half of the each clock cycle when the external reset signal is invalid;
wherein in the work state, a value of the work register and a value of the complementary register are complementary, and a value of the output register and a value of the output complementary register are complementary.

9. The method according to claim 8, wherein
putting, by the control unit, the work register, the complementary register, the output register and the output complementary register into the reset state comprises: sending, by the control unit, a valid reset signal to the work register, the complementary register, the output register and the output complementary register;
putting, by the control unit, the work register and the complementary register into the work state, and putting, by the control unit, the output register and the output complementary register into the reset state comprises: sending, by the control unit, the external clock signal and an invalid reset signal to the work register and the complementary register, and sending, by the control unit, the valid reset signal to the output register and output complementary register;
putting, by the control unit, the output register and the output complementary register into the work state, and putting, by the control unit, the work register and the complementary register into the reset state comprises: sending, by the control unit, the external clock signal and the invalid reset signal to the output register and output complementary register, and sending, by the control unit, the valid reset signal to the work register and complementary register.

10. A control device, configured to:
receive an external reset signal and an external clock signal;
when the external reset signal is valid, put a work register, a complementary register, an output register and an output complementary register into a reset state;
when the external reset signal is invalid, put the work register and the complementary register into a work state, and put the output register and the output complementary register into the reset state in a first half of each clock cycle;
when the external reset signal is invalid, put the output register and the output complementary register into the work state, and put the work register and the complementary register into the reset state in the second half of the each clock cycle;
wherein in the work state, a value of the work register and a value of the complementary register are complementary, and a value of the output register and a value of the output complementary register are complementary.

11. The control device according to claim 10, wherein the control device is further configured to
when the external reset signal is valid, send a valid reset signal to the work register, the complementary register, the output register and the output complementary register;
when the external reset signal is invalid, send the external clock signal and an invalid reset signal to the work register and the complementary register, and send the valid reset signal to the output register and output complementary register in the first half of the each clock cycle;
when the external reset signal is invalid, send the external clock signal and the invalid reset signal to the output register and output complementary register, and send the valid reset signal to the work register and complementary register in the second half of the each clock cycle.

12. The control device according to claim 11, wherein the control unit comprises: a CLK, an RST, an LL, a Work1, a Work2, a PreC1, a PreC2, a NOR, an OR1, an OR2, an OR3, an OR4, and an OR5;
the CLK and the LL connect to input ports of the NOR and input ports of the OR1 respectively;
an output port of the NOR and the RST connect to input ports of the OR2;
the output port of the NOR and the LL connect to input ports of the OR3;
the RST and an output port of the OR1 connect to input ports of the OR4;
the output port of the OR1 and the LL connect to input ports of the OR5;
an output port of the OR2 connects to the PreC1;
an output port of the OR3 connects to the Work2;
an output port of the OR4 connects to the PreC2; and
an output port of the OR5 connects to the Work1;
wherein Work1 is a first clock signal output port, Work2 is a second clock signal output port, PreC1 is a first reset signal output port, PreC2 is a second reset signal output port, LL is a Low Signal Level Port, NOR is a NOR gate, OR1-OR5 are OR gates, and CLK is a clock signal input port.

## Patentansprüche

1. Doppelschichtiges Verbindungsregistersystem, umfassend: eine Steuereinheit, ein Arbeitsregister, ein komplementäres Register, ein Ausgaberegister und ein komplementäres Ausgaberegister; wobei die Steuereinheit dafür ausgelegt ist, ein externes Rücksetzsignal und ein externes Taktsignal zu empfangen;
wenn das externe Rücksetzsignal gültig ist, die Steuereinheit ferner dafür ausgelegt ist, das Arbeitsregister, das komplementäre Register, das Ausgaberegister und das komplementäre Ausgaberegister in einen Rücksetzzustand zu versetzen;
wenn das externe Rücksetzsignal ungültig ist, die Steuereinheit ferner dafür ausgelegt ist, das Arbeitsregister und das komplementäre Register in einen Arbeitszustand zu versetzen und das Ausgaberegister und das komplementäre Ausgaberegister in einer ersten Hälfte jedes Taktzyklus in den Rücksetzzustand zu versetzen;
wenn das externe Rücksetzsignal ungültig ist, die Steuereinheit ferner dafür ausgelegt ist, das Ausgaberegister und das komplementäre Ausgaberegister in den Arbeitszustand zu versetzen und das Arbeitsregister und das komplementäre Register in der zweiten Hälfte jedes Taktzyklus in den Rücksetzzustand zu versetzen;
im Arbeitszustand ein Wert des Arbeitsregisters und ein Wert des komplementären Registers komplementär sind und ein Wert des Ausgaberegisters und ein Wert des komplementären Ausgaberegisters komplementär sind.

2. System gemäß Anspruch 1, wobei
wenn das externe Rücksetzsignal gültig ist, die Steuereinheit ferner dafür ausgelegt ist, ein gültiges Rücksetzsignal an das Arbeitsregister, das komplementäre Register, das Ausgaberegister und das komplementäre Ausgaberegister zu senden;
wenn das externe Rücksetzsignal ungültig ist, die Steuereinheit ferner dafür ausgelegt ist, das externe Taktsignal und ein ungültiges Rücksetzsignal an das Arbeitsregister und das komplementäre Register zu senden und in der ersten Hälfte jedes Taktzyklus das gültige Rücksetzsignal an das Ausgaberegister und das komplementäre Ausgaberegister zu senden;
wenn das externe Rücksetzsignal ungültig ist, die Steuereinheit ferner dafür ausgelegt ist, das externe Taktsignal und das ungültige Rücksetzsignal an das Ausgaberegister und das komplementäre Ausgaberegister zu senden und in der zweiten Hälfte jedes Taktzyklus das gültige Rücksetzsignal an das Arbeitsregister und das komplementäre Register zu senden.

3. System gemäß Anspruch 2, wobei die Steuereinheit umfasst: ein CLK, ein RST, ein LL, ein Work1, ein Work2, ein PreC1, ein PreC2, ein NOR, ein OR1, ein OR2, ein OR3, ein OR4 und ein OR5;
wobei das CLK und das LL die Eingangsanschlüsse des NOR bzw. Eingangsanschlüsse des OR1 verbindet;
ein Ausgangsanschluss des NOR und des RST mit Eingangsanschlüssen des OR2 verbunden ist; der Ausgangsanschluss des NOR und des LL mit Eingangsanschlüssen des OR3 verbunden ist; das RST und ein Ausgangsanschluss des OR1 mit Eingangsanschlüssen des OR4 verbunden sind; der Ausgangsanschluss des OR1 und des LL mit Eingangsanschlüssen des OR5 verbunden ist; ein Ausgangsanschluss des OR2 mit dem PreC1 verbunden ist; ein Ausgangsanschluss des OR3 mit dem Work2 verbunden ist; ein Ausgangsanschluss des OR4 mit dem PreC2 verbunden ist und ein Ausgangsanschluss des OR5 mit dem Work1 verbunden ist; wobei Work1 ein erster Taktsignal-Ausgangsanschluss ist, Work2 ein zweiter Taktsignal-Ausgangsanschluss ist, PreC1 ein erster Rücksetzsignal-Ausgangsanschluss ist, PreC2 ein zweiter Rücksetzsignal-Ausgangsanschluss ist, LL ein Anschluss mit niedrigem Signalpegel ist, NOR ein NOR-Glied ist, OR1-OR5 OR-Glieder sind und CLK ein Taktsignal-Eingangsanschluss ist.

4. System gemäß Anspruch 3, ferner umfassend: ein Din und ein Dout; wobei das Din über ein D1 mit einem Din1 des Arbeitsregisters verbunden ist,
das Din über ein NOT1 mit einem Din2 des komplementären Registers verbunden ist;
ein Dout1 des Arbeitsregisters mit einem Din3 des Ausgaberegisters verbunden ist;
ein Dout2 des komplementären Registers mit einem Din4 des komplementären Ausgaberegisters verbunden ist; und
ein Dout3 des Ausgaberegisters mit dem Dout verbunden ist;
wobei Din, Din1, Din2, Din3 und Din4 Dateneingangsanschlüsse sind, Dout1, Dout2, Dout3 und Dout Datenausgangsanschlüsse sind, D1 ein erstes Verzögerungsglied ist und NOT1 ein erstes NOT-Glied ist.

5. System gemäß Anspruch 3, ferner umfassend: ein Din und ein Dout; wobei das Din über ein D1 mit einem Din1 des Arbeitsregisters verbunden ist, das Din über ein NOT1 mit einem Din2 des komplementären Registers verbunden ist;
ein Dout1 des Arbeitsregisters mit einem Din3 des Ausgaberegisters verbunden ist;
ein Dout2 des komplementären Registers mit einem Din4 des komplementären Ausgaberegisters verbunden ist; und
ein Dout3 des Ausgaberegisters über ein D2 mit einem Eingangsanschluss eines OR6 verbunden ist;
ein Dout4 des komplementären Ausgaberegisters über ein NOT2 mit einem anderen Anschluss des OR6 verbunden ist; und
ein Ausgangsanschluss des OR6 mit dem Dout verbunden ist; wobei Din, Din1, Din2, Din3 und Din4 Dateneingangsanschlüsse sind, Dout1, Dout2, Dout3, Dout4 und Dout Datenausgangsanschlüsse sind, D1 ein erstes Verzögerungsglied ist, NOT1 ein erstes NOT-Glied ist, OR6 ein sechstes OR-Glied ist, D2 ein zweites Verzögerungsglied ist und NOT2 ein zweites NOT-Glied ist.

6. System gemäß Anspruch 4 oder 5, wobei die Verzögerung des D1 die gleiche ist wie die des NOT1; die Verzögerung des D2 die gleiche ist wie die des NOT2; und die Verzögerung des NOR die gleiche ist wie die des OR1.

7. System gemäß einem der Ansprüche 1 bis 5, wobei das Arbeitsregister, das komplementäre Register, das Ausgaberegister und das komplementäre Ausgaberegister doppelflankengesteuerte Register sind.

8. Verfahren zur Beständigkeit gegen Energieanalyseangriffe, umfassend:
Empfangen, von einer Steuereinheit, eines externen Rücksetzsignals und eines externen Taktsignals;
Versetzen, durch die Steuereinheit, eines Arbeitsregisters, eines komplementären Registers, eines Ausgaberegisters und eines komplementären Ausgaberegisters in einen Rücksetzzustand, wenn das externe Rücksetzsignal gültig ist;
Versetzen, durch die Steuereinheit, des Arbeitsregisters und des komplementären Registers in einen Arbeitszustand und Versetzen, durch die Steuereinheit, des Ausgaberegisters und des komplementären Ausgaberegisters in den Rücksetzzustand in einer ersten Hälfte jedes Taktzyklus, wenn das externe Rücksetzsignal ungültig ist;
Versetzen, durch die Steuereinheit, des Ausgaberegisters und des komplementären Ausgaberegisters in den Arbeitszustand und Versetzen, durch die Steuereinheit, des Arbeitsregisters und des komplementären Registers in den Rücksetzzustand in der zweiten Hälfte jedes Taktzyklus, wenn das externe Rücksetzsignal ungültig ist;
wobei im Arbeitszustand ein Wert des Arbeitsregisters und ein Wert des komplementären Registers komplementär sind und ein Wert des Ausgaberegisters und ein Wert des komplementären Ausgaberegisters komplementär sind.

9. Verfahren gemäß Anspruch 8, wobei
das Versetzen, durch die Steuereinheit, des Arbeitsregisters, des komplementären Registers, des Ausgaberegisters und des komplementären Ausgaberegisters in den Rücksetzzustand umfasst: Senden, durch die Steuereinheit, eines gültigen Rücksetzsignals an das Arbeitsregister, das komplementäre Register, das Ausgaberegister und das komplementäre Ausgaberegister;
das Versetzen, durch die Steuereinheit, des Arbeitsregisters und des komplementären Registers in den Arbeitszustand und Versetzen, durch die Steuereinheit, des Ausgaberegisters und des komplementären Ausgaberegisters in den Rücksetzzustand umfasst: Senden, durch die Steuereinheit, des externen Taktsignals und eines ungültigen Rücksetzsignals an das Arbeitsregister und das komplementäre Register und Senden, durch die Steuereinheit, des gültigen Rücksetzsignals an das Ausgaberegister und das komplementäre Ausgaberegister;
das Versetzen, durch die Steuereinheit, des Ausgaberegisters und des komplementären Ausgaberegisters in den Arbeitszustand und das Versetzen, durch die Steuereinheit, des Arbeitsregisters und des komplementären Registers in den Rücksetzzustand umfasst: Senden, durch die Steuereinheit, des externen Taktsignals und des ungültigen Rücksetzsignals an das Ausgaberegister und das komplementäre Ausgaberegister und Senden, durch die Steuereinheit, des gültigen Rücksetzsignals an das Arbeitsregister und das komplementäre Register.

10. Steuereinheit, die dafür ausgelegt ist, ein externes Rücksetzsignal und ein externes Taktsignal zu empfangen; wenn das externe Rücksetzsignal gültig ist, ein Arbeitsregister, ein komplementäres Register, ein Ausgaberegister und ein komplementäres Ausgaberegister in einen Rücksetzzustand zu versetzen; wenn das externe Rücksetzsignal ungültig ist, das Arbeitsregister und das komplementäre Register in einen Arbeitszustand zu versetzen und das Ausgaberegister und das komplementäre Ausgaberegister in einer ersten Hälfte jedes Taktzyklus in den Rücksetzzustand zu versetzen;
wenn das externe Rücksetzsignal ungültig ist, das Ausgaberegister und das komplementäre Ausgaberegister in den Arbeitszustand zu versetzen und das Arbeitsregister und das komplementäre Register in der zweiten Hälfte jedes Taktzyklus in den Rücksetzzustand zu versetzen;
wobei im Arbeitszustand ein Wert des Arbeitsregisters und ein Wert des komplementären Registers komplementär sind und ein Wert des Ausgaberegisters und ein Wert des komplementären Ausgaberegisters komplementär sind.

11. Steuervorrichtung gemäß Anspruch 10, wobei die Steuervorrichtung ferner dafür ausgelegt ist,
wenn das externe Rücksetzsignal gültig ist, ein gültiges Rücksetzsignal an das Arbeitsregister, das komplementäre Register, das Ausgaberegister und das komplementäre Ausgaberegister zu senden;
wenn das externe Rücksetzsignal ungültig ist, das externe Taktsignal und ein ungültiges Rücksetzsignal an das Arbeitsregister und das komplementäre Register zu senden und in der ersten Hälfte jedes Taktzyklus das gültige Rücksetzsignal an das Ausgaberegister und das komplementäre Ausgaberegister zu senden;
wenn das externe Rücksetzsignal ungültig ist, das externe Taktsignal und das ungültige Rücksetzsignal an das Ausgaberegister und das komplementäre Ausgaberegister zu senden und in der zweiten Hälfte jedes Taktzyklus das gültige Rücksetzsignal an das Arbeitsregister und das komplementäre Register zu senden.

12. Steuervorrichtung gemäß Anspruch 11, wobei die Steuereinheit umfasst:
ein CLK, ein RST, ein LL, ein Work1, ein Work2, ein PreC1, ein PreC2, ein NOR, ein OR1, ein OR2, ein OR3, ein OR4 und ein OR5;
wobei das CLK und das LL die Eingangsanschlüsse des NOR bzw. Eingangsanschlüsse des OR1 verbindet;
ein Ausgangsanschluss des NOR und des RST mit Eingangsanschlüssen des OR2 verbunden ist; der Ausgangsanschluss des NOR und des LL mit Eingangsanschlüssen des OR3 verbunden ist; das RST und ein Ausgangsanschluss des OR1 mit Eingangsanschlüssen des OR4 verbunden sind; der Ausgangsanschluss des OR1 und des LL mit Eingangsanschlüssen des OR5 verbunden ist; ein Ausgangsanschluss des OR2 mit dem PreC1 verbunden ist; ein Ausgangsanschluss des OR3 mit dem Work2 verbunden ist;
ein Ausgangsanschluss des OR4 mit dem PreC2 verbunden ist und ein Ausgangsanschluss des OR5 mit dem Work1 verbunden ist; wobei Work1 ein erster Taktsignal-Ausgangsanschluss ist, Work2 ein zweiter Taktsignal-Ausgangsanschluss ist, PreC1 ein erster Rücksetzsignal-Ausgangsanschluss ist, PreC2 ein zweiter Rücksetzsignal-Ausgangsanschluss ist, LL ein Anschluss mit niedrigem Signalpegel ist, NOR ein NOR-Glied ist, OR1-OR5 OR-Glieder sind und CLK ein Taktsignal-Eingangsanschluss ist.

## Revendications

1. Système composite de registres à double couche, comprenant :
une unité de commande, un registre de travail, un registre complémentaire, un registre de sortie et un registre complémentaire de sortie ; dans lequel :
l'unité de commande est configurée pour recevoir un signal de réinitialisation externe et un signal d'horloge externe ;
lorsque le signal de réinitialisation externe est valide, l'unité de commande est en outre configurée pour placer le registre de travail, le registre complémentaire, le registre de sortie et le registre complémentaire de sortie dans un état de réinitialisation ;
lorsque le signal de réinitialisation externe est invalide, l'unité de commande est en outre configurée pour placer le registre de travail et le registre complémentaire dans un état de travail, et pour placer le registre de sortie et le registre complémentaire de sortie dans l'état de réinitialisation dans une première moitié de chaque cycle d'horloge ;
lorsque le signal de réinitialisation externe est invalide, l'unité de commande est en outre configurée pour placer le registre de sortie et le registre complémentaire de sortie dans l'état de travail, et pour placer le registre de travail et le registre complémentaire dans l'état de réinitialisation dans la seconde moitié de chaque cycle d'horloge ;
dans l'état de travail, une valeur du registre de travail et une valeur du registre complémentaire sont complémentaires, et une valeur du registre de sortie et une valeur du registre complémentaire de sortie sont complémentaires.

2. Système selon la revendication 1, dans lequel :
lorsque le signal de réinitialisation externe est valide, l'unité de commande est en outre configurée pour envoyer un signal de réinitialisation valide au registre de travail, au registre complémentaire, au registre de sortie et au registre complémentaire de sortie ;
lorsque le signal de réinitialisation externe est invalide, l'unité de commande est en outre configurée pour envoyer le signal d'horloge externe et le signal de réinitialisation invalide au registre de travail et au registre complémentaire, et pour envoyer le signal de réinitialisation valide au registre de sortie et au registre complémentaire de sortie dans la première moitié de chaque cycle d'horloge ;
lorsque le signal de réinitialisation externe est invalide, l'unité de commande est en outre configurée pour envoyer le signal d'horloge externe et le signal de réinitialisation invalide au registre de sortie et au registre complémentaire de sortie, et pour envoyer le signal de réinitialisation valide au registre de travail et au registre complémentaire dans la seconde moitié de chaque cycle d'horloge.

3. Système selon la revendication 2, dans lequel l'unité de commande comprend : un CLK, un RST, un LL, un Work1, un Work2, un PreC1, un PreC2, une NOR, une OR1, une OR2, une OR3, une OR4 et une OR5 ;
le CLK et le LL sont respectivement connectés à des ports d'entrée de la NOR et à des ports d'entrée de l'OR1 ;
un port de sortie de la NOR et le RST sont connectés à des ports d'entrée de l'OR2 ;
le port de sortie de la NOR et le LL sont connectés à des ports d'entrée de l'OR3;
le RST et un port de sortie de l'OR1 sont connectés à des ports d'entrée de l'OR4 ;
le port de sortie de l'OR1 et le LL sont connectés à des ports d'entrée de l'OR5 ;
un port de sortie de l'OR2 est connecté au PreC1 ;
un port de sortie de l'OR3 est connecté au Work2 ;
un port de sortie de l'OR4 est connecté au PreC2 ; et
un port de sortie de l'OR5 est connecté au Work1 ; dans lequel :
Work1 est un premier port de sortie de signal d'horloge, Work2 est un second port de sortie de signal d'horloge, PreC1 est un premier port de sortie de signal de réinitialisation, PreC2 est un second port de sortie de signal de réinitialisation, LL est un port de niveau de signal bas, NOR est une porte NOR, OR1 à OR5 sont des portes OR et CLK est un port d'entrée de signal d'horloge.

4. Système selon la revendication 3, comprenant en outre : un Din et un Dout ; dans lequel :
le Din est connecté à un Din1 du registre de travail via une D1 ;
le Din est connecté à un Din2 du registre complémentaire via une NOT1 ;
un Dout1 du registre de travail est connecté à un Din3 du registre de sortie ;
un Dout2 du registre complémentaire est connecté à un Din4 du registre complémentaire de sortie ; et
un Dout3 du registre de sortie est connecté au Dout ; dans lequel :
Din, Din1, Din2, Din3 et Din4 sont des ports d'entrée de données, Dout1, Dout2, Dout3 et Dout sont des ports de sortie de données, D1 est une première porte de retard et NOT1 est une première porte NOT.

5. Système selon la revendication 3, comprenant en outre : un Din et un Dout ; dans lequel :
le Din est connecté à un Din1 du registre de travail via une D1 ;
le Din est connecté à un Din2 du registre complémentaire via une NOT1 ;
un Dout1 du registre de travail est connecté à un Din3 du registre de sortie ;
un Dout2 du registre complémentaire est connecté à un Din4 du registre complémentaire de sortie ; et
un Dout3 du registre de sortie est connecté à un port d'entrée d'une OR6 via une D2 ;
un Dout4 du registre complémentaire de sortie est connecté à un autre port de l'OR6 via une NOT2 ; et
un port de sortie de l'OR6 est connecté au Dout ; dans lequel :
Din, Din1, Din2, Din3 et Din4 sont des ports d'entrée de données, Dout1, Dout2, Dout3, Dout4 et Dout sont des ports de sortie de données, D1 est une première porte de retard, NOT1 est une première porte NOT, OR6 est une sixième porte OR, D2 est une seconde porte de retard et NOT2 est une seconde porte NOT.

6. Système selon la revendication 4 ou 5, dans lequel :
le retard de la D1 est le même que celui de la NOT1 ;
le retard de la D2 est le même que celui de la NOT2 ; et
le retard de la NOR est le même que celui de l'OR1.

7. Système selon l'une quelconque des revendications 1 à 5, dans lequel le registre de travail, le registre complémentaire, le registre de sortie et le registre complémentaire de sortie sont des registres déclenchés par double front.

8. Procédé pour résister à une attaque d'analyse de d'énergie, comprenant :
la réception, en provenance d'une unité de commande, d'un signal de réinitialisation externe et d'un signal d'horloge externe ;
le placement, par l'unité de commande, d'un registre de travail, d'un registre complémentaire, d'un registre de sortie et d'un registre complémentaire de sortie dans un état de réinitialisation lorsque le signal de réinitialisation externe est valide ;
le placement, par l'unité de commande, du registre de travail et du registre complémentaire dans un état de travail, et le placement, par l'unité de commande, du registre de sortie et du registre complémentaire de sortie dans l'état de réinitialisation dans une première moitié de chaque cycle d'horloge lorsque le signal de réinitialisation externe est invalide ;
le placement, par l'unité de commande, du registre de sortie et du registre complémentaire de sortie dans l'état de travail, et le placement, par l'unité de commande, du registre de travail et du registre complémentaire dans l'état de réinitialisation dans la seconde moitié de chaque cycle d'horloge lorsque le signal de réinitialisation externe est invalide ; dans lequel :
dans l'état de travail, une valeur du registre de travail et une valeur du registre complémentaire sont complémentaires, et une valeur du registre de sortie et une valeur du registre complémentaire de sortie sont complémentaires.

9. Procédé selon la revendication 8, dans lequel :
le placement, par l'unité de commande, du registre de travail, du registre complémentaire, du registre de sortie et du registre complémentaire de sortie dans l'état de réinitialisation comprend :
l'envoi, par l'unité de commande, d'un signal de réinitialisation valide au registre de travail, au registre complémentaire, au registre de sortie et au registre complémentaire de sortie ;
le placement, par l'unité de commande, du registre de travail et du registre complémentaire dans l'état de travail, et le placement, par l'unité de commande, du registre de sortie et du registre complémentaire de sortie dans l'état de réinitialisation comprennent :
l'envoi, par l'unité de commande, du signal d'horloge externe et d'un signal de réinitialisation invalide au registre de travail et au registre complémentaire, et l'envoi, par l'unité de commande, du signal de réinitialisation valide au registre de sortie et au registre complémentaire de sortie ;
le placement, par l'unité de commande, du registre de sortie et du registre complémentaire de sortie dans l'état de travail, et le placement, par l'unité de commande, du registre de travail et du registre complémentaire dans l'état de réinitialisation comprennent :
l'envoi, par l'unité de commande, du signal d'horloge externe et du signal de réinitialisation invalide au registre de sortie et au registre complémentaire de sortie, et l'envoi, par l'unité de commande, du signal de réinitialisation valide au registre de travail et au registre complémentaire.

10. Dispositif de commande, configuré pour :
recevoir un signal de réinitialisation externe et un signal d'horloge externe ;
lorsque le signal de réinitialisation externe est valide, placer un registre de travail, un registre complémentaire, un registre de sortie et un registre complémentaire de sortie dans un état de réinitialisation ;
lorsque le signal de réinitialisation externe est invalide, placer le registre de travail et le registre complémentaire dans un état de travail, et placer le registre de sortie et le registre complémentaire de sortie dans l'état de réinitialisation dans une première moitié de chaque cycle d'horloge ;
lorsque le signal de réinitialisation externe est invalide, placer le registre de sortie et le registre complémentaire de sortie dans l'état de travail, et placer le registre de travail et le registre complémentaire dans l'état de réinitialisation dans la seconde moitié de chaque cycle d'horloge ; dans lequel :
dans l'état de travail, une valeur du registre de travail et une valeur du registre complémentaire sont complémentaires, et une valeur du registre de sortie et une valeur du registre complémentaire de sortie sont complémentaires.

11. Dispositif de commande selon la revendication 10, dans lequel le dispositif de commande est en outre configuré pour :
lorsque le signal de réinitialisation externe est valide, envoyer un signal de réinitialisation valide sur le registre de travail, sur le registre complémentaire, sur le registre de sortie et sur le registre complémentaire de sortie ;
lorsque le signal de réinitialisation externe est invalide, envoyer le signal d'horloge externe et un signal de réinitialisation invalide sur le registre de travail et sur le registre complémentaire, et envoyer le signal de réinitialisation valide sur le registre de sortie et sur le registre complémentaire de sortie dans la première moitié de chaque cycle d'horloge ;
lorsque le signal de réinitialisation externe est invalide, envoyer le signal d'horloge externe et le signal de réinitialisation invalide sur le registre de sortie et sur le registre complémentaire de sortie, et envoyer le signal de réinitialisation valide sur le registre de travail et sur le registre complémentaire dans la seconde moitié de chaque cycle d'horloge.

12. Dispositif de commande selon la revendication 11, dans lequel l'unité de commande comprend : un CLK, un RST, un LL, un Work1, un Work2, un PreC1, un PreC2, une NOR, une OR1, une OR2, une OR3, une OR4 et une OR5 ;
le CLK et le LL sont respectivement connectés à des ports d'entrée de la NOR et à des ports d'entrée de l'OR1 ;
un port de sortie de la NOR et le RST sont connectés à des ports d'entrée de l'OR2 ;
le port de sortie de la NOR et le LL sont connectés à des ports d'entrée de l'OR3;
le RST et un port de sortie de l'OR1 sont connectés à des ports d'entrée de l'OR4 ;
le port de sortie de l'OR1 et le LL sont connectés à des ports d'entrée de l'OR5 ;
un port de sortie de l'OR2 est connecté au PreC1 ;
un port de sortie de l'OR3 est connecté au Work2 ;
un port de sortie de l'OR4 est connecté au PreC2 ; et
un port de sortie de l'OR5 est connecté au Work1 ; dans lequel :
Work1 est un premier port de sortie de signal d'horloge, Work2 est un second port de sortie de signal d'horloge, PreC1 est un premier port de sortie de signal de réinitialisation, PreC2 est un second port de sortie de signal de réinitialisation, LL est un port de niveau de signal bas, NOR est une porte NOR, OR1 à OR5 sont des portes OR et CLK est un port d'entrée de signal d'horloge.
